# EUROPEAN PATENT APPLICATION

(11) **EP 4 730 852 A1**
(43) Date of publication of application: **22.04.2026**
(21) Application number: 24207556.2
(22) Date of filing: 18.10.2024
(51) Int. Cl.: H04W 12/082, B60R 25/24, H04L 9/32, H04W 4/40, H04W 12/47, H04W 12/50, H04L 9/40

(54) **A DEVICE, A SERVER AND A METHOD FOR SETTING A PARAMETER OF A DIGITAL KEY-BASED SERVICE**

(71) Applicant: Bayerische Motoren Werke Aktiengesellschaft, 80809 München (DE)
(72) Inventor: Fink, Matthias, 81541 München (DE)

(57) **Abstract**

The present document describes a digital key device (110) comprising a digital key (111) which is enabled for controlling one or more vehicle functions (103) of a vehicle (100). The digital key device (110) is configured to determine one or more client- and/or server-side parameters for a digital key-based service regarding the vehicle (100), and to generate signed service management request data based on the one or more client- and/or server-side parameters, using the digital key (111). Furthermore, the digital key device (110) is configured to send a service management request to a management server (190) of the digital key-based service for requesting the digital key-based service regarding the vehicle (100) to be provided, wherein the service management request comprises the signed service management request data.

## Description

The present document is directed at enabling the use of a digital key-based service for a vehicle.

A vehicle may comprise a communication unit which allows a user to control one or more functions of the vehicle using a portable device, such as a smartphone or a smart watch. Example functions which may be controlled using the portable device are unlocking and/or locking of a door of the vehicle and/or starting the engine of the vehicle. The portable device typically comprises a digital key for authentication of the portal device at the vehicle. Such a portable device may be referred to as a digital key device. The digital key may be a CCC (Car Connectivity Consortium) digital key.

A user of a digital key device may share the digital key for controlling the one or more vehicle functions with a service provider, notably with a server of a service provider, for enabling the service provider to provide a vehicle-related service using a shared digital key. Example services are a valet parking service of the vehicle or a maintenance service for maintaining the vehicle. A vehicle-related service which involves the use of a shared digital key may be referred to as a digital key-based service.

The present document is directed at setting up a digital key-based service in a flexible and secure manner. The technical problem is solved by each one of the independent claims. Preferred examples are specified in the dependent claims.

According to an aspect, a digital key device comprising a digital key which is enabled for controlling one or more vehicle functions of a vehicle is described. The digital key device is configured to determine one or more client- and/or server-side parameters for a digital key-based service regarding the vehicle, and to generate signed service management request data based on the one or more client- and/or server-side parameters, using the digital key. Furthermore, the digital key device is configured to send a service management request to a management server of the digital key-based service for requesting the digital key-based service regarding the vehicle to be provided, wherein the signed service management request comprises the signed service management request data.

According to a further aspect, a management server for a digital-key based service regarding a vehicle is described, wherein the management server is configured to receive a service management request from a digital key device with a digital key, and wherein the service management request comprises signed service management request data with a digital signature that has been generated using the digital key. The management server is configured to extract one or more client- and/or server-side parameters for the digital key-based service from the service management request data, and to cause the digital key-based service to be provided in dependance of the one or more client- and/or server-side parameters.

According to another aspect, a method for requesting a digital key-based service regarding a vehicle using a digital key which is enabled for controlling one or more vehicle functions of the vehicle is described. The method comprises determining one or more client- and/or server-side parameters for the digital key-based service regarding the vehicle, and generating signed service management request data based on the one or more client- and/or server-side parameters, using the digital key. Furthermore, the method comprises sending a service management request to a management server of the digital key-based service for requesting the digital key-based service regarding the vehicle to be provided, wherein the signed service management request comprises the signed service management request data.

According to a further aspect, a method for providing a digital-key based service regarding a vehicle using a digital key is described, wherein the method comprises receiving a service management request, wherein the service management request comprises signed service management request data with a digital signature that has been generated using the digital key. The method further comprises extracting one or more client- and/or server-side parameters for the digital key-based service from the service management request data, and providing the digital key-based service in dependance of the one or more client- and/or server-side parameters.

According to a further aspect, a software program is described. The software program may be adapted for execution on a processor and for performing the method steps of the one or more methods outlined in the present document when carried out on the processor.

According to another aspect, a storage medium is described. The storage medium may comprise a software program adapted for execution on a processor and for performing the method steps of the one or more method steps outlined in the present document when carried out on the processor.

According to a further aspect, a computer program product is described. The computer program may comprise executable instructions for performing the method steps of the one or more methods outlined in the present document when executed on a computer.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner. Furthermore, it is noted that brackets are used within the present document to indicate optional features.

The invention is explained below in an exemplary manner with reference to the accompanying drawings, wherein
Fig. 1a shows an example system for controlling a vehicle function using a digital key device;
Fig. 1b shows an example digital key device, notably an owner device and/or a sharer device;
Fig. 2 illustrates an example scenario for setting up a digital key-based service; and
Figs. 3a and 3b each show a flow chart of an example method for setting up a digital key-based service.

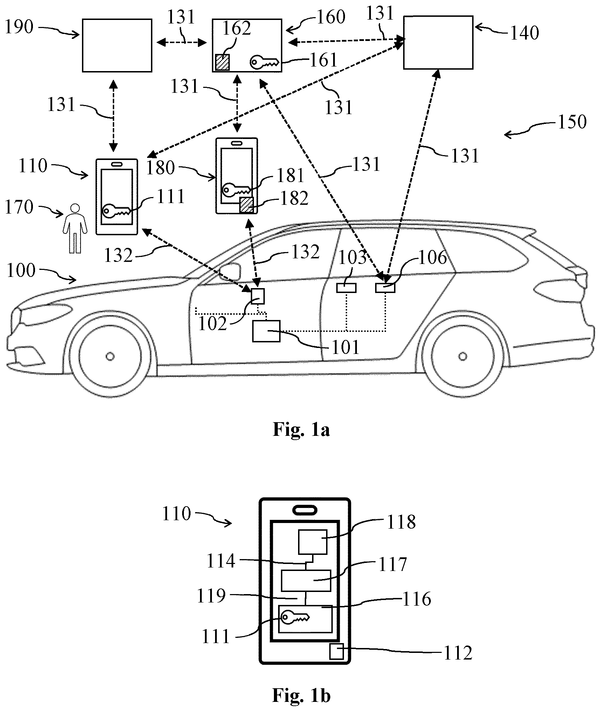

As outlined above, the present document is directed at the technical problem of setting up a digital key based-service with regards to a vehicle (such as a car) in a flexible and secure manner. In this context, Fig. 1a shows an example system 150 which comprises a vehicle 100 and at least one digital key device 110. The digital key device 110 may be a portable electronic device, such as a smartphone, a tablet PC, a wearable smart device (such as a smart watch), etc., wherein a digital key 111 is stored on the portable electronic device, notably on a protected memory section (e.g., the secure element) of the portable electronic device. The device 110 typically comprises an integrated power supply, such as a battery, in order to allow the device 110 to be operated in an autonomous manner.

The digital key device 110 may communicate with a communication unit 102, 105 of the vehicle 100 via one or more different wireless communication links 132. Different communication links 132 may be used for different purposes. In particular, a Bluetooth Low Energy (BLE) communication link 132 may be used to
- determine the distance and/or the relative position between the digital key device 110 and the vehicle 100 (notably based on the signal strength, in particular the RSSI (Received Signal Strength Indicator), of the radio signals which are exchanged between the vehicle 100 and the device 110, and/or based on a channel sounding technique); and/or
- exchange data between the digital key device 110 (e.g., a control command for controlling a vehicle function, such as unlocking a door and/or opening or closing a window and/or activating or deactivating a heating function).

Alternatively, or in addition, a Ultrawideband (UWB) communication link may be used to determine the location of the device 110 relative to the vehicle 100 in a relatively precise manner. The determination of the location of the device 110 using the UWB communication link may be referred to as UWB ranging.

Alternatively, or in addition, a Near Field Communication (NFC) communication link 132 may be used to provide a short-range communication between the device 110 and the vehicle 100. For establishing the NFC communication link 132, the device 110 may be held in close proximity (e.g. in a distance of less than 10cm) from the communication unit 102 of the vehicle 100.

A control unit 101 of the vehicle 100 may be configured to control at least one vehicle function 103 of the vehicle 100 in dependence of the communication between the device 110 and the vehicle 100. In this context, the digital key 111 of the device 110 may be verified, in particular authenticated. Furthermore, subject to authentication, one or more vehicle functions 103 may be controlled, notably in dependence of
- the distance between the device 110 and the vehicle 100;
- the location of the device 110 relative to the vehicle 100; and/or
- a control command sent by the device 110 to the vehicle 100 via a communication link 132.

In an example system 150, a BLE communication link 132 may be established between the device 110 and the vehicle 100, once the distance between the device 110 and the vehicle 100 is equal to or less than a first distance threshold. Once the BLE communication link 132 has been established, the device 110 may be authenticated with the vehicle 100 using the digital key 111 of the device 110. Subject to authentication of the device 110, the device 110 may be enabled to send one or more control commands via the communication link 132 for controlling one or more vehicle functions 103.

The system 150 may comprise a vehicle-server 140 which may e.g. be managed by a manufacturer of the vehicle 100. The device 110 and/or a communication unit 106 of the vehicle 100 may be configured to communication with the vehicle-server 140 via a (wireless) communication link 131 (e.g., a 3G, 4G, 5G or higher communication link).

Fig. 1b shows details of an electronic device 110 (i.e., the digital key device). Fig. 1b shows the secure storage area 116, in particular the so-called "secure element", in which the digital key 111 is stored. The secure storage area 116 typically comprises a digital key (DK) applet that is designed to provide one or more functions (e.g., generating a digital signature) with respect to the digital key 111.

The device 110 may comprise an operating system 117 which is configured to interact with the storage area 116, notably with the key applet of the storage area 116, via a (secure) data interface 119. The operating system 117 may execute a software application 118, e.g. a software application 118 which is configured to interact with the vehicle-server 140. The operating system 117 may be configured to transfer data between the software application 118 and the operating system 117 via a data interface 114. Furthermore, the device 110 may comprise a communication module 112 for establishing a communication link 132 with the vehicle 100.

The user 170 of the device 110 with the digital key 111 may enable another user and/or another electronic device to control one or more vehicle functions 103. For this purpose, the digital key device 110 may cause a shared digital key to be provided to another electronic device, wherein the shared digital key typically determines the scope of the one or more vehicle functions 103 that can be controlled by the other electronic device. The shared digital key is derived from the digital key 111. In particular, the shared digital key may be a subordinate key of the digital key 111 (within a given public key infrastructure, PKI).

The digital key device 110 (which may also be referred to as the sharer device) may send a transfer request to the vehicle server 140 and/or to the other device via the communication link 131, in order to initiate the creation of a shared digital key on the other device. The transfer request may be signed with the digital key 111 of the digital key device 110. Furthermore, the transfer request may specify a set of the one or more vehicle functions 103 that can be controlled by the digital key (i.e., the entitlements of the shared digital key).

Hence, the digital key device 110 may provide information (e.g., the entitlements) which is used for creating a shared digital key to the other device (which may be referred to as the receiver device). The receiver device may create the shared digital key (with a secret key and a public key). The public key (PK) of the shared digital key (along with information such as the entitlements) may be sent to the digital key device 110. The digital key device 110 may sign the PK of the shared digital key (along with the information regarding the shared digital key), e.g. using the private key of the digital key 111. This data forms a first part of the attestation of the shared digital key.

The first part of the attestation may be sent to the vehicle server 140. The vehicle server 140 may verify the first part of the attestation (using the PK of the digital key 111) and may optionally create an immobilizer token (which is typically needed for an engine start of the vehicle 100). Furthermore, the vehicle server 140 may sign a data package comprising the first part of the attestation and/or data added by the vehicle server 140 (using the private key of the central digital key of the vehicle server 140), thereby generating the attestation for the shared digital key. This attestation may be sent to the receiver device (i.e., to the other electronic device). Furthermore, the attestation may be sent to the vehicle 100.

The attestation can be used by the vehicle 100 to check the authenticity of the shared digital key of the other electronic device. For this purpose, the vehicle 100 uses the digital key 111, notably the public key of the digital key 111, of the digital key device 110, from which the sharing of the shared digital key was initiated. The digital key 111 of the device 110 may have been used to sign one or more properties of the shared digital key (such as the entitlements of the shared digital key). Furthermore, a central digital key, notably the public key (PK) of the central digital key, of the vehicle server 140 may be required, with which the attestation for the shared digital key for the other electronic device 120 has been signed. The central digital key may have been used to sign meta information regarding the shared digital key (such as the receipt of the KTS (key tracking server)).

Typically, the shared digital key (along with other metadata) is comprised within the attestation, such that only the attestation is provided to the vehicle 100 and/or to the other electronic device (within respective messages). From this attestation 122, the shared digital key can be extracted. The integrity of the attestation may be verified using the (public key of the) central digital key of the vehicle server 140 and/or the (public key of the) digital key 111 from which the shared digital key was derived.

As an alternative to an owner device 110, a digital key 111 may be owned by a server, e.g., a server for managing a fleet of vehicles, as may be used by a car rental company. A server 160 that owns a digital key 111 to a vehicle 100 may be referred to as a SBOD (Server Based Owner Device). Alternatively, or in addition, a sharer device 110 may share a digital key 111 with a service server 160, wherein a service server 160 with a shared digital key 161 may be referred to as a SBFD (Server Based Friend Device). A SBOD is typically the root element of the sharing tree (i.e. of the key hierarchy) of a digital key 111. When a vehicle 100 is infleeted into a fleet of vehicles, a SBOD may be provided that a rental or fleet provider can interact with to request one or more key sharings (for one or more different electronic devices 180).

A SBFD may be provided by directly or indirectly sharing a digital key 161 with the owner (a natural person or a server) of the digital key 111. In the context of the sharing process, an attestation 162 of the digital key 161 may be generated (and stored on the service server 160 acting as a SBFD). The SBFD may be linked with a service provider, wherein the service provider may interact with the SBFD to trigger a key sharing (based on the digital key 161), e.g. in order to provide a shared digital key 181 to an electronic device 180 of a customer of the service provider (e.g. in case of a car sharing service) or to an electronic device 180 of an employee of the service provider (e.g. in case of a maintenance service). Within the key sharing process an attestation 182 of the shared digital key 181 may be generated.

The process of sharing a digital key 111 to the server of a service provider may be referred to as service activation. An SBFD service may be created by performing a service activation using a so-called service management request. The service management request may be signed by the digital key 111 of the device 110 that performs the service activation. As an alternative to using the service management request, a key sharing process can be performed with a server using the CCC key sharing protocol.

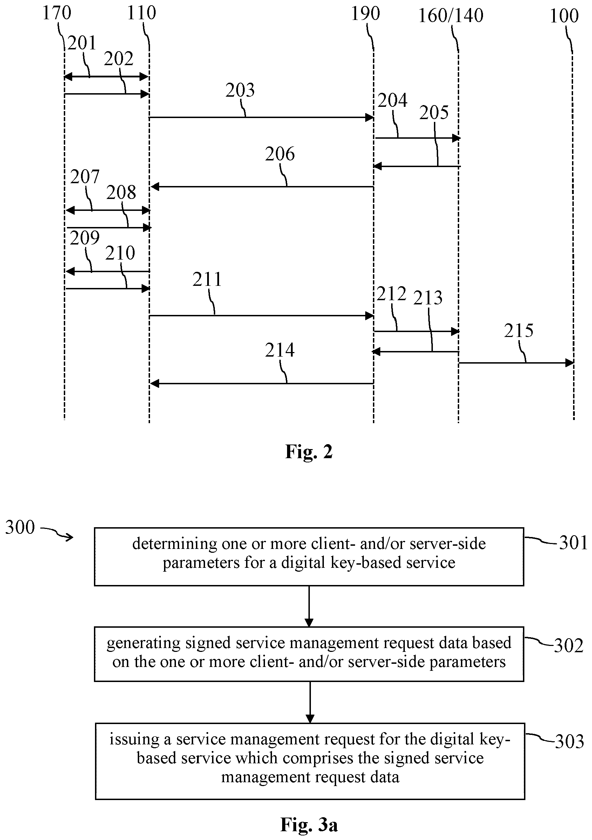

Fig. 2 illustrates a service activation process for a digital key-related service. A software application 118 on the digital key device 110 that holds a digital key 111 to the vehicle 100 for which the service shall be activated may be used. The software application 118 may provide service data with regards to the service to the secure element 116 of the device 110. The service data may be referred to as "secure sign data". The secure element 116 may generate service management request data for a service management request based on the service data. The service data may comprise one or more service parameters (e.g., within one or more tags of the service data) which may be included into the service management request, notably within the secure management request data for the service management request. The one or more service parameters may comprise
- one or more server and/or service-side parameters (which are imposed by the server 160 which provides the service); and/or
- one or more client-side parameters (which indicate preferences of the user 170 of the service).

The one or more server- and/or service-side parameters may be directly provided by the server 160. The one or more client-side parameters may be provided by the software application 118 (e.g., based on one or more user inputs of the user 170).

The service data (comprising the one or more parameters for specifying the service) may be provided to the secure element 116 of the device 110, in order to generate a signature for the service data. This may be achieved by sending a "secure sign command" to the secure element 116. The signature may be created using the private key of the digital key 111 of the device 110, which is associated with the vehicle 100. Hence, signed service data (notably signed service management request data) may be provided. The server 160 may use the signed service data to securely identify which service is to be enabled and/or which one or more parameters are to be used for the service. The software application 118 receives the signed service data from the secure element 116 and may forward the signed service data (along with the service management request) to the server 160.

The process in Fig. 2 comprises a first phase during which the one or more server-side and/or the client-side parameters may be defined. The user 170 may interact with the device 110, notably with the software application 118 of the device 110, to select a set of one or more client-side parameters. Example client-side parameters are:
- a variant of the service which is to be provided;
- a time interval during which the service is to be provided; and/or
- an instruction to an operator of the service provider.

The set of one or more client-side parameters may e.g. be selected from a menu such as a drop-down menu within the user interface that is provided by the software application 118.

Subsequent to defining a set of client-side parameters (steps 201, 202), a subset of the set of client-side parameters may be provided to the service server 160. The subset may comprise only those one or more client-side parameters from the set of client-side parameters, which have an impact on a server-side parameter. The subset of client-side parameters may be provided to the service server 160, e.g. via a management server 190 of the service provider (steps 203, 204). The set of server-side parameters may be compiled by the service server 160 (in dependence of the subset of client-side parameters), and may be provided to the device 110 (steps 205, 206).

The user 170 may then be given the opportunity to verify the set of server-side parameters (step 207). Furthermore, the user may adapt the subset of client-side parameters, e.g. if the user is not agreeable with one or more of the set of server-side parameters. The adaption of a client-side parameter may lead to a further execution of the steps 203, 204, 205, 206.

It should be noted that alternatively, or in addition, the user 170 may be enabled to select an option for a server-side parameter from a plurality of different options for the server-side parameter. The plurality of different options may be provided by the service server 160 to the device 110 (e.g., within the service data, notably within the service management request data, or within a separate data unit, notably if the options are provided within explanatory text and/or other information).

On the other hand, the user 170 may accept the set of server-side parameters and the set of client-side parameters (step 208), which may then form the service data (i.e. the service management request data) for the service management request. The user 170 may then be requested to authorize signing of the service data (steps 209, 210), and subject to the authorization by the user 170, the service data may be signed with the private key of the digital key 111 of the device 110, thereby providing the secure service data (i.e., the signed service management request data which may be the combination of the service management request data and the digital signature that has been generated based on the service management request data).

The device 110, notably the software application 118, may then pass the service management request (along with the secure service data) to the management server 190 of the service provider (step 211), in order to cause the management server 190 to provide the service as specified within the secure service data. For this purpose, the service server 160, notably the SBFD or the SBOD, may be requested to verify the service management request, notably the secure service data (steps 212, 213). In particular the digital signature of the service management request data may be verified using the public key of the digital key 111 of the device 110. If the verification is successful, the service server 160 may share a digital key with the management server 190 or a service device 180 for enabling the provision of the service with regards to the vehicle 100 (step 213). Information regarding the shared digital key may also be provided to the vehicle 100, in order to enable the control of one or more vehicle functions 103 of the vehicle 100 using the shared digital key (step 215). Furthermore, the device 110, notably the software application 118, may be informed that the set up of the service has been successful (step 214).

Hence, (signed) service management request data which comprises one or more parameter containers (i.e., tags) for one or more client-side parameters and/or for one or more server-side parameters may be used to specify information regarding a vehicle-related service in a structured way that is relevant for the to be performed service management request. As a result of this, the parameters are part of the service management request signature that is created by the digital key 111 of the device 110 that initiates the service management request. Upon request, one or more parameters can be extracted by the software application 118 of the device 110 from the service data (i.e., from the (unsigned) service management request data) and may be shown to the user prior to signing the service management request (thereby enabling the user 170 to fix and/or select the parameters for the service in a reliable manner). One or more server-side parameters may be evaluated by the software application 118 of the device 110, e.g., in order to request direct user input for the one or more server-side parameters from the user 170. Alternatively, or in addition, the one or more server-side parameters may be derived from user input by the user 170. User input may result in one or more client-side parameters (which may be included into a container of the service management request data). The service management request (with the signed service management request data comprising one or more server- and/or client-side parameters) may be archived and retrieved as needed.

It should be noted that the service server 160 (notably the SBFD or the SBOD) may be implemented jointly with and/or as part of the vehicle server 140.

The digital key-based service regarding the vehicle 100 may be provided by the management server 190 (in accordance with the service management request data). For this purpose, a shared digital key 181 may be used, wherein the shared digital key 181 may be provided by the service server 160 (based on a digital key 161 of the SBFD). In the example shown in Fig. 1a, the shared digital key 181 is provided to an electronic (service) device 180 (along with the attestation 182). Furthermore, the public key of the shared digital key 181 may be provided to the vehicle 100 (possibly along with the attestation 182). As a result of this, a user of the electronic device 180 may be enabled to provide a service with regards to the vehicle 100. The scope of the service may be defined by the one or more client- and/or server-side parameters.

Fig. 3a shows a flow chart of an example method 300 for requesting a digital key-based service regarding a vehicle 100 using a digital key 111, wherein the digital key 111 is enabled for controlling one or more vehicle functions 103 of the vehicle 100. The method 300 may be executed by a (handheld and/or electronic) digital key device 110 of a user 170. The digital key-based service may be a maintenance service for the vehicle 100 and/or a service for enabling the usage of the vehicle 100 within a fleet of vehicles (such as a fleet of vehicles of a car rental service).

The method 300 comprises determining 301 one or more client- and/or server-side parameters for the digital key-based service regarding the vehicle 100. The one or more client-side parameters may be set and/or defined by the user 170 via a user interface of the digital key device 110. The one or more server-side parameters may be set and/or defined by the management server 190 of the service provider of the digital-key based service.

Furthermore, the method 300 comprises generating 302 signed service management request data based on the one or more client- and/or server-side parameters, using the digital key 111. The service management request data may comprise the client- and/or server-side parameters for the service within one or more containers (or tags). A digital signature of the service management request data may be generated using the (private key of the) digital key 111, thereby generating the signed service management request data which comprises the service management request data and the digital signature.

The method 300 further comprises sending 303 a service management request to the management server 190 of the digital key-based service for requesting the digital key-based service regarding the vehicle 100 to be provided, wherein the service management request comprises the signed service management request data.

By providing one or more client- and/or server-side parameters within signed service management request data, the scope of the digital key-based service may be defined in a flexible and reliable manner.

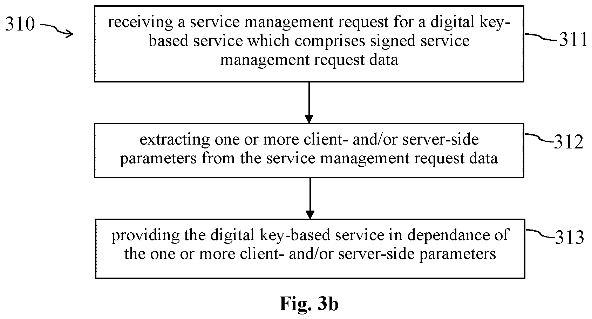

Fig. 3b shows a flow chart of an example method 310 for providing a digital-key based service regarding a vehicle 100 using a digital key 111. The method 310 may be executed by a management server 190 (of a service provider) for providing the digital key-based service.

The method 310 comprises receiving 311a service management request (from a digital key device 110 with the digital key 111), wherein the service management request comprises signed service management request data with a digital signature that has been generated using the digital key 111 (over a communication link 131).

Furthermore, the method 310 comprises extracting 312 one or more client- and/or server-side parameters for the digital key-based service from (one or more containers of) the service management request data. Furthermore, the validity and/or the authenticity of the one or more client- and/or server-side parameters may be verified using the digital signature and the (public key of the) digital key 111.

In addition, the method 310 comprises providing 313 the digital key-based service in dependance of the one or more client- and/or server-side parameters (subject to a confirmation of the validity and/or the authenticity of the one or more client- and/or server-side parameters). The digital key-based service may be provided using a shared digital key 161, 181, which is a subordinate key of the digital key 111 of the digital key device 110 within a key hierarchy.

Hence, a digital key device 110 comprising a digital key 111 is described, wherein the digital key 111 is enabled for controlling one or more vehicle functions 103 of a vehicle 100. The digital key device 110 is configured to determine one or more client- and/or server-side parameters for a digital key-based service regarding the vehicle 100. The digital key 111 (and the one or more subordinate and/or shared digital keys) may be a Car Connectivity Consortium, CCC, digital key, according to the CCC Digital Key Standard, Release 3, Release 4 or higher.

The one or more client-side parameters may be fixed by the user 170 of the digital key device 110 (e.g. via a user interface of the digital key device 110). The one or more client-side parameters may be indicative of
- a variant of the digital-key based service out of multiple different variants of the digital-key based service;
- the time interval during which the digital-key based service is to be provided; and/or
- an instruction to an operator of the service provider for providing the digital-key based service.

Hence, the digital key device 110 may be configured to determine the one or more client-side parameters based on a user input by a user 170 of the digital key device 110.

The one or more server-side parameters may be fixed by the management server 190 and/or by the service provider of the digital-key based service. Hence, the digital key device 110 may be configured to determine the one or more server-side parameters by receiving the one or more service-side parameters (from the management server 190).

The digital key device 110 may be configured to determine a set of one or more client-side parameters for the digital key-based service, based on a user input captured by the user interface of the digital key device 110. A subset of the set of one or more client-side parameters may be sent to the management server 190, wherein the management server 190 may be configured to generate a set of one or more server-side parameters based on the subset of one or more client-side parameters.

In reaction to sending the subset of one or more client-side parameters, the set of one or more server-side parameters for the digital key-based service may be received by the digital key device 110.

The digital key device 110 may be configured to output the set of one or more server-side parameters via the user interface of the digital key device 110. Furthermore, the digital key device 110 may be configured to determine whether or not the set of one or more server-side parameters is agreeable to the user 170 of the digital key device 110, based on a user input captured by the user interface of the digital key device 110.

The digital key device 110 may determine a plurality of options with regards to a server-side parameter. The plurality of options may have been provided by the management server 190. The digital key device 110 may be configured to output the plurality of options for the server-side parameter via the user interface of the digital key device 110. The user 170 may then select one of the plurality of options for the server-side parameter, thereby causing the digital key device 110 to determine the service-side parameter.

Hence, an interactive communication between the digital key device 110 and the management server 190 may be performed, thereby allowing the set of one or more server-side parameters and/or the set of one or more client-side parameters to be fixed in a particularly reliable and precise manner.

The digital key device 110 may be further configured to generate signed service management request data based on the one or more client- and/or server-side parameters, using the digital key 111. In particular, the digital key device 110 may be configured to determine, via the user interface of the digital key device 110, whether or not the user 170 of the digital key device 110 is agreeable with a set of one or more client-side parameters and/or a set of one or more server-side parameters. The signed service management request data may be generated based on the set of one or more client-side parameters and/or based on the set of one or more server-side parameters, if it is determined that the user 170 is agreeable.

The digital key device 110 may be configured to generate a digital signature of the service management request data using the private key of the digital key 111 of the digital key device 110. The signed service management request data may comprise the digital signature and the service management request data.

The digital key device 110 may be configured to add one or more client-side parameters to a data container, notably to a client-side parameter specific container, of the service management request data. Furthermore, the digital key device 110 may be configured to retrieve and/or confirm one or more server-side parameters from or within a data container, notably from or within a server-side parameter specific container, of the service management request data. As outlined above, the one or more server-side parameters are typically set by the management server 190. These one or more service-side parameters may have been added to the data container, notably to the service-side parameter specific container, of the service management request data by the management server 190. The digital key device 110 may be configured to retrieve these one or more service-side parameters from the data container. Furthermore, the digital key device 110 may be configured to confirm these one or more service-side parameters (notably based on a user input).

By providing separate containers (i.e. tags) within the service management request data for the one or more client-side parameters and for the one or more server-side parameters, the digital key-based service may be defined in a particularly flexible and precise manner.

The digital key device 110 may be further configured to send a service management request to the management server 190 of the digital key-based service for requesting the digital key-based service regarding the vehicle 100 to be provided, wherein the service management request comprises the signed service management request data.

Furthermore, a service management request which comprises signed service management request data is described, wherein the signed service management request data comprises one or more client- and/or server-side parameters for a digital key-based service.

In addition, a management server 190 for a digital-key based service regarding a vehicle 100 is described. The management server 190 is configured to receive a service management request from a digital key device 110 with a digital key 110, wherein the service management request comprises signed service management request data with a digital signature that has been generated using the digital key 111.

The management server 190 may be configured to receive a set of zero, one or more client-side parameters from the digital key device 110, and to determine a set of one or more server-side parameters based on the set of one or more client-side parameters. The set of one or more server-side parameters may be sent to the digital key device 110. Hence, an interactive process between the digital key device 110 and the management server 190 may be performed to specify the one or more client-side parameters and/or the one or more server-side parameters for defining the digital key-based service in a flexible and precise manner. This interactive process may be performed prior to receiving the service management request and the service management request data (by the management server 190).

The management server 190 is further configured to extract one or more client- and/or server-side parameters for the digital key-based service from the service management request data. One or more client-side parameters may be extracted from a data container, notably from a client-side parameter specific container, of the service management request data. Furthermore, one or more server-side parameters may be added to and/or extracted from a data container, notably from a server-side parameter specific container, of the service management request data.

In addition, the management service 190 is configured to cause the digital key-based service to be provided in dependance of the one or more client- and/or server-side parameters, in particular in dependance of the one or more client-side parameters and/or the one or more server-side parameters. The management server 190 may be configured to cause a key server 140, 160 to provide a shared digital key 181 to a service device 180, in order to enable the service device 180 for the provision of the digital key-based service regarding the vehicle 100, wherein the shared digital key 181 is typically a subordinate key of the digital key 111 of the digital key device 110 within a key hierarchy.

The management server 190 may be configured to verify authenticity of the service management request data, notably of the one or more client- and/or server-side parameters, based on the digital signature and based on the public key of the digital key 111 of the digital key device 110. Furthermore, the management server 190 may be configured to cause the digital key-based service to be provided in dependance of the one or more client- and/or server-side parameters, if (notably only if) the authenticity of the service management request data, notably of the one or more client- and/or server-side parameters, is confirmed.

As a result of this, a particularly reliable definition of the scope of the digital key-based service may be achieved.

The service management request and the service management request data may be used for
- setting up a digital key-based service; and/or
- altering a digital key-based service (e.g., the scope of the service).

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A digital key device (110) comprising a digital key (111) which is enabled for controlling one or more vehicle functions (103) of a vehicle (100); wherein the digital key device (110) is configured to
- determine one or more client- and/or server-side parameters for a digital key-based service regarding the vehicle (100);
- generate signed service management request data based on the one or more client- and/or server-side parameters, using the digital key (111); and
- send a service management request to a management server (190) of the digital key-based service for requesting the digital key-based service regarding the vehicle (100) to be provided; wherein the service management request comprises the signed service management request data.

2. The digital key device (110) of claim 1, wherein the digital key device (110) is configured to
- determine a set of one or more client-side parameters for the digital key-based service, based on a user input captured by a user interface of the digital key device (110);
- send a subset of the set of one or more client-side parameters to the management server (190); and
- in reaction to sending the subset of one or more client-side parameters, receive a set of one or more server-side parameters for the digital key-based service.

3. The digital key device (110) of claim 2, wherein the digital key device (110) is configured to
- output the set of one or more server-side parameters via the user interface of the digital key device (110); and
- determine whether or not the set of one or more server-side parameters is agreeable to a user (170) of the digital key device (110), based on a user input captured by a user interface of the digital key device (110).

4. The digital key device (110) of any previous claim, wherein the digital key device (110) is configured to
- determine, via a user interface of the digital key device (110), whether or not a user (170) of the digital key device (110) is agreeable with a set of one or more client-side parameters and/or a set of one or more server-side parameters; and
- generate the signed service management request data based on the set of one or more client-side parameters and/or based on the set of one or more server-side parameters, if it is determined that the user (170) is agreeable.

5. The digital key device (110) of any previous claim, wherein the digital key device (110) is configured to
- add one or more client-side parameters to a data container, notably to a client-side parameter specific container, of the service management request data; and/or
- retrieve one or more server-side parameters from a data container, notably from a server-side parameter specific container, of the service management request data.

6. The digital key device (110) of any previous claim, wherein the digital key device (110) is configured to generate a digital signature of the service management request data using a private key of the digital key (111) of the digital key device (110).

7. The digital key device (110) of any previous claim, wherein
- the one or more client-side parameters are fixed by a user (170) of the digital key device (110); and/or
- the one or more client-side parameters are indicative of
- a variant of the digital-key based service out of multiple different variants of the digital-key based service;
- a time interval during which the digital-key based service is to be provided; and/or
- an instruction to an operator of a service provider for providing the digital-key based service.

8. The digital key device (110) of any previous claim, wherein the one or more server-side parameters are fixed by the management server (190) and/or by a service provider of the digital-key based service.

9. A management server (190) for a digital-key based service regarding a vehicle (100); wherein the management server (190) is configured to
- receive a service management request from a digital key device (110) with a digital key (111); wherein the service management request comprises signed service management request data with a digital signature that has been generated using the digital key (111);
- extract one or more client- and/or server-side parameters for the digital key-based service from the service management request data; and
- cause the digital key-based service to be provided in dependance of the one or more client- and/or server-side parameters.

10. The management server (190) of claim 9, wherein the management server (190) is configured to
- verify authenticity of the service management request data, notably of the one or more client- and/or server-side parameters, based on the digital signature and based on a public key of the digital key (111) of the digital key device (110); and
- cause the digital key-based service to be provided in dependance of the one or more client- and/or server-side parameters, if the authenticity of the service management request data, notably of the one or more client- and/or server-side parameters, is confirmed.

11. The management server (190) of any of claims 9 to 10, wherein the management server (190) is configured to
- extract one or more client-side parameters from a data container, notably from a client-side parameter specific container, of the service management request data; and/or
- extract one or more server-side parameters from a data container, notably from a server-side parameter specific container, of the service management request data; and
- cause the digital key-based service to be provided in dependance of the one or more client-side parameters and/or the one or more server-side parameters.

12. The management server (190) of any of claims 9 to 11, wherein
- the management server (190) is configured to cause a key server (140, 160) to provide a shared digital key (181) to a service device (180), in order to enable the service device (180) for the provision of the digital key-based service regarding the vehicle (100); and
- the shared digital key (181) is a subordinate key of the digital key (111) of the digital key device (110) within a key hierarchy.

13. The management server (190) of any of claims 9 to 12, wherein the management server (190) is configured to
- receive a set of one or more client-side parameters from the digital key device (110);
- determine a set of one or more server-side parameters based on the set of one or more client-side parameters; and
- send the set of one or more server-side parameters to the digital key device (110).

14. A method (300) for requesting a digital key-based service regarding a vehicle (100) using a digital key (111) which is enabled for controlling one or more vehicle functions (103) of the vehicle (100); wherein the method (300) comprises
- determining (301) one or more client- and/or server-side parameters for the digital key-based service regarding the vehicle (100);
- generating (302) signed service management request data based on the one or more client- and/or server-side parameters, using the digital key (111); and
- sending (303) a service management request to a management server (190) of the digital key-based service for requesting the digital key-based service regarding the vehicle (100) to be provided; wherein the service management request comprises the signed service management request data.

15. A method (310) for providing a digital-key based service regarding a vehicle (100) using a digital key (111); wherein the method (310) comprises
- receiving (311) a service management request; wherein the service management request comprises signed service management request data with a digital signature that has been generated using the digital key (111);
- extracting (312) one or more client- and/or server-side parameters for the digital key-based service from the service management request data; and
- providing (313) the digital key-based service in dependance of the one or more client- and/or server-side parameters.
